# EUROPEAN PATENT SPECIFICATION

(11) **EP 2 093 343 B1**
(45) Date of publication and mention of the grant of the patent: **05.04.2017**
(21) Application number: 09250471.1
(22) Date of filing: 23.02.2009
(51) Int. Cl.: E04B 9/20, F16B 5/06, F16B 35/06, E04B 1/26, E04B 1/35

(54) **Tension device for connection and tensioning of means connected to construction elements and method for producing the tension device**
Spannvorrichtung zur Verbindung und Spannung von mit Bauelementen verbundenen Mitteln und Verfahren zur Herstellung der Spannvorrichtung
Dispositif de tension pour la connexion et la tension d'accessoires connectés à des éléments de construction et procédé de production de dispositif de tension

(30) Priority: 22.02.2008 GB 0803264
(43) Date of publication of application: 26.08.2009
(73) Proprietor: Simpson Strong-Tie Company, Inc., Pleasanton, CA 94588 (US)
(72) Inventor: Friis, Niels, 8300 Odder (DK)
(74) Representative: Boult Wade Tennant

(56) References cited:
- EP-A- 0 223 680
- AU-B2- 770 233
- DE-C- 338 457
- US-B1- 6 363 671

## Description

The present invention relates to a tension device for receiving and tensioning connecting means e.g. a strap and a threaded rod between at least two construction elements. Furthermore, the present invention relates to a method for producing a tension device.

### Background art

Tension systems are known for tensioning wires and straps when securing building parts e.g. in order to tie down a girder. In order to connect e.g. a metal strap, either the strap or the tension device needs to be adapted on site. Such "on site"-adapting could e.g. be folding clamping plates around the strap or folding the strap around a part of the tension system. This adapting is often carried out at awkward places by a worker e.g. standing on a ladder or scaffold.

Adapting the connection means to the strap is time-consuming because these operations are carried out at building sites at which only smaller hand operated tools are present. In case the tensioning device consists of more specially adapted parts, the risk of losing one of the parts is present, which would stop the tensioning process and thus the construction process.

A tension device is subjected to extraordinary loads during period of times in which the construction elements are subjected to an extraordinary load e.g. during strong wind. Likewise, the tension device is subjected to an extraordinary load if it is used for drawing two elements towards each other. Thus, the connection between the tension device and the strap needs to be connected in a way minimising the risk of faults from the worker.

German patent DE 338457A describes a system using two sets of rigging screws for tensioning. The rigging screws are placed at each side of the straps. The system consists of clamping plates, threaded rods and a part functioning as a nut cooperating with the rods. Australian patent AU 770233B2 describes a bracing system for structures and includes a threaded bar of the type having generally planar opposite side walls, mounting brackets at each end of the bar and threaded nuts securing the brackets at each end of the bar. One of the nuts is secured to the bar to prevent relative rotation whereby the bar may be tensioned by relative rotation between the bar and a rotatable nut. The rotatable nut may be formed integrally with one of the brackets.

### Description of the invention

The present invention addresses the disadvantages of the prior art mentioned above and provides an improved tension device that is simpler in its construction and faster to install.

This present invention provides, in a first aspect, a tension device for receiving and tensioning connecting means e.g. a strap and a threaded rod between at least two construction elements, wherein the tensioning device comprises:
- two connected clamping plates, each clamping plate having a first end part and a second end part, said first end part of the clamping plates having a number of apertures adapted to receive fastening means, the apertures of the two clamping plates being respectively in alignment of each other, and the clamping plates defining a longitudinal axis in the direction of the tension,
- said second end part of each of the clamping plates being provided with an opening, the opening of the clamping plates being in alignment of each other, the opening of each clamping plate defining a bridge section between the opening and the end of the clamping plates opposite the first end part,
- a sleeve member having a first end collar and a second end collar and an intermediate swivel surface delimited by the collars,
   and
- the bridge sections of the two clamping plates jointly form a tubular bearing member substantially coaxial with the said longitudinal axis, said tubular bearing member enclosing the sleeve member between the collars.

By forming a tubular bearing member of the bridge section and placing a sleeve member herein the connection between the means connected to the construction element is easily established and tensioning can start. If tensioning should be applied between a threaded rod and metal strap only a nut and self-tapering screws are needed.

The rod is simply positioned in the sleeve of the tension device and a nut is applied on a piece of the rod extending through the sleeve into the opening. The metal strap is connected to the tension device simply using self-tapering screws which are placed in apertures of the tension device and corresponding apertures of the strap. Tensioning is obtained by tightening the nut.

The tubular bearing member with the sleeve is capable of withstanding at least equally as much tensioning force as the metal strap or the rod. When connecting the rod and the strap with the tension device in this way, it is obtained that the strength of the connection is determined by the weaker of the two means, i.e. the rod or the metal strap and not by the tension device.

The material of the clamping plates could be e.g. 2 mm thick and provide a tubular bearing member with the height of e.g. 30 mm and a high stiffness from the relatively thin material placed parallel to the longitudinal axis of the tubular bearing. When tensioning the tension device, the load applied to the tubular bearing is parallel to the longitudinal axis and thus the load is applied in the direction in which the tubular bearing provides the highest strength.

Preferably, the tubular bearing member can have a circular cross section. However, in another embodiment the tubular bearing member could have e.g. a rhomb-shaped or hexagonal cross section.

Advantageously, each clamping plate can be provided with at least one projection section with a first end attached to the clamping plate and a second free end, said projection section being bend so that the first and the second clamping plate are connected, at least in a direction perpendicular to said longitudinal axis.

The projection sections provide means for connecting the two clamping plates in a simple and cheap way. When the projection sections are bend around the other clamping plates respectively, the combination of the sleeve member and the two clamping plates provide an integrated device locked together in all directions. This is achieved without additional means such as pins or screws and thus the manufacturing process is simplified.

In a preferred embodiment the projection sections can be projecting from the edge of the clamping plates at the second end part of the clamping plates.

Thus, the projection sections are positioned the furthest possible distance from the contact point of the first end collar of the sleeve member and the tubular bearing. This way it is achieved that a torque arising perpendicular to the longitudinal axis of the sleeve member is held back at the position the furthest distance from its pivot point. Tests have shown that said torque will arise at the first end collar of the sleeve member and therefore have its pivot point at the first end of the sleeve member. Thus, counteracting the effect of this torque is best achieved at a point having the longest arm to the pivot point.

Having the projection sections positioned at the second end part of the tension device, the construction is in a simple way adapted to withstand extraordinary loads. In yet another embodiment, the projection sections could be punched in the second end of the clamping plates instead of projecting from the edge of the clamping plates.

According to a preferred embodiment of the invention, the length of the projection section from its first end attached to the clamping plates to its free second end can be at least twice the thickness of the clamping plates. This way, the clamping plates will be held by the projection sections by folding the free end of the projection sections essentially 180° around the other clamping plate. Consequently, a part of each projection section, said part having a length equal to or longer than the thickness of the clamping plates, is dislocated to a plane parallel to the clamping plate to which it is attached.

Preferably, the first end part of each clamping plate can be arranged in a first plane essentially parallel to the longitudinal axis and the second end part of each clamping plate can be arranged in a second plane essentially parallel to the longitudinal axis, the second end parts of the two plates abutting each other.

By dislocating the first end part and second end part of the clamping plates a space between the first end parts of the two clamping plates is achieved, provided that their second end parts are aligned and abutting each other. Thereby, the first end part of the clamping plates is adapted so that the tension device can receive e.g. a strap or similar means in order to connect the tension device to a structural element via said strap. This way, the worker is provided with a tension device having an easy and safe fastening between the tension device and the connection means.

According to an advantageous embodiment of the invention, the clamping plates may be essentially identical. A major benefit is achieved when the two clamping plates are essentially identical. As for most productions, the total number of elements to be produced is important when calculating the costs of each element. Thus, when the clamping plates are essentially identical, the number of clamping plates produced is higher and thus the costs of producing the single clamping plate are reduced.

According to a preferred embodiment of the invention, the sleeve member is arranged with an internal thread. Having an internal thread the sleeve member functions as a nut thus being able to connect to e.g. a threaded rod. This way it is achieved that the threaded rod is connected directly to the tension device.

According to yet another embodiment of the invention the second end collar is arranged with opposing surfaces e.g. arranged as a hexagonal nut.

Advantageously, the distance between the first end parts of the clamping plates could be 1 - 3 mm, preferably 1,25 - 2,75 mm, most preferred 1,5 - 2,5 mm. The tension device is at its first end parts adapted to receive means to connect to e.g. a metal strap. This way, the tension device is at its first end part adapted to receive a means that in general has the same thickness as the clamping plates of the tension device itself.

According to a preferred embodiment of the invention, at least a number of the apertures could be arranged with a distance of essentially 20 mm on a line perpendicular to the longitudinal axis, i.e. the direction of tension. A distance of 20 mm has proven to be beneficial because the strength of the clamping plates is equal to or higher than the connecting means, e.g. metal straps, when considering the same thickness, commonly used in e.g. the building industry.

According to the present invention the tension device is preferably produced by:
- providing raw material e.g, in form of coils,
- punching apertures arranged at the first end of the clamping plates,
- forming at least one projection section on at least one edge of the second end part of each clamping plates,
- forming a stretched Z-form (of each clamping plate) by forming the clamping plates in such way as to have the first end part in a first plane parallel to the longitudinal axis of the clamping plates and the second end part in a second plane parallel to the longitudinal axis of the clamping plates, said two planes being essentially parallel,
- forming a semi-circular bearing surface in the bridge section of the second end part of each clamping plate,
- placing the sleeve member in the semi-circular bearing surface of one of the clamping plates,
- rotating the other clamping plate in such way that the first end part of the clamping plates are opposing each other and the projection sections from the edges are respectively on each side of the sleeve member,
- placing the second clamping plate in such way that it covers the first clamping plate by abutting the second end parts of the clamping plates, thereby forming an essentially tubular bearing member of the cooperating second end parts of the clamping plates,
- folding the projection sections of the clamping plates essentially 180° around a part of the other clamping plate, whereby the two clamping plates and the sleeve member are locked together.

When manufacturing the tension device it is achieved that the manufacturing process is carried out as automatically as possible. Therefore, e.g. manual assembling processes could be avoided. Having formed the clamping plates, the tension device is assembled by a simple process where the projection section of the one clamping plate is folded around the edge of the other after the sleeve member is positioned. This way, a simple and cost effective assembly of the tension device is achieved. It is implied that some of the steps could be carried out simultaneously.

### Brief Description of the Drawings

Preferred embodiments of the present invention will now be described by way of example only with reference to the accompanying drawings, in which:
Fig. 1 shows in perspective view the tension device connected to a strap and a threaded rod,
Fig. 2A shows a front view of the tension device,
Fig. 2B shows a side view of the tension device,
Fig. 2C shows the sleeve member, and
Fig. 3A - 3C show by a cross sectional view along the line III - III in Fig. 2 the steps in the process of folding the projection sections around the other clamping plate.

### Detailed description of the Invention

The invention is described below by way of example with the assumption that the tension device is connecting a threaded rod and a metal strap. However, within the scope of the invention the tension device could be used with other connection means.

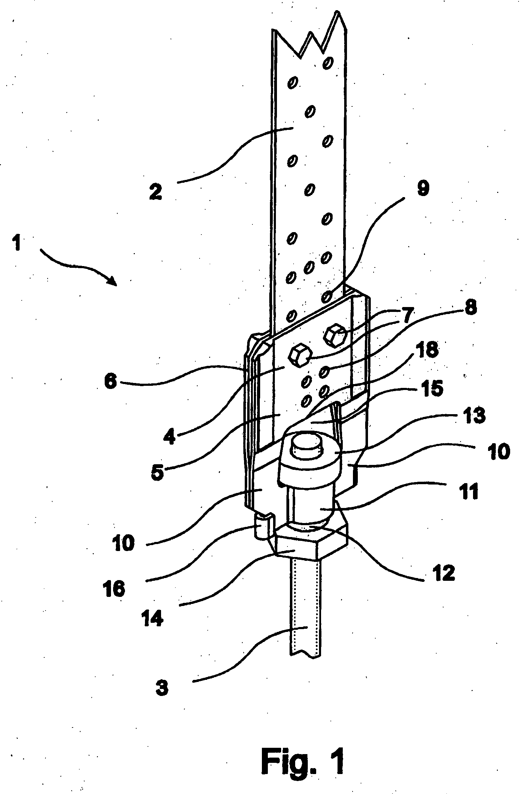

In Fig. 1 shows a tension device 1. The tension device 1 is used for connecting a strap 2 and a threaded rod 3. The strap 2 is held between a first end part 4 of a clamping plate 5 and a clamping plate 6. The strap 2 is fastened between the clamping plates 5, 6 by means of fastening means 7 e.g. self-tapering screws arranged in apertures 8 in the first end part 4 of the clamping plates 5, 6 (only apertures 8 with no fastening means in them are visible). It is seen that the apertures 8 can be placed at various distances, the apertures 8 in which the fastening means 7 are mounted are placed at a distance of 20 mm from each other. It is sufficient to use only two self-tapering screws 7 because the self-tapering screws 7 are mounted through the apertures 8 of the one clamping plate 6, extending through apertures 9 of the strap 2 and through the apertures 8 of the other clamping plate 5. When the strap 2 is positioned between the clamping plates 5, 6 with a tight fit, only shear force from the strap 2 acts on the fastening means 7 and therefore the best possible strength from the fastening means is achieved.

The apertures 8 of the first end part 4 are arranged with a distance of 20 mm in order to be adapted to the apertures of the strap 2. The second end part 10 of the clamping plates 5, 6 is formed with a tubular bearing surface 11 for receiving an intermediate section of a sleeve member 12. The sleeve member 12 comprises a first end 13 and a second end 14. The outer surface of the second end 14 of the sleeve member 12 is arranged with opposing surfaces similar to a nut for engagement with a wrench or similar.

An opening 15 is provided in the clamping plates 5, 6. Said opening 15 is adapted to receive the first end collar 13 of the sleeve member 12. It is seen that a free space is provided between a second end part edge 18 of the opening 15 and the first end collar 13 in order to make it possible for the threaded rod 3 to extend beyond the first end collar 13 of the sleeve member 12.

In an embodiment where no internal thread is provided in the sleeve member 12, said free space is used to receive a nut (not shown).

When the tension device 1 is connected to the strap 2 and the threaded rod 3 is engaged in the sleeve member 12 it is possible to start tensioning the connection by turning the internally threaded sleeve member 12, whereby the threaded rod 3 and the strap 2 are drawn towards each other. Thereby a load is subjected from the first end 13 of the sleeve member 12 onto the rim of the tubular bearing surface 11 arranged to withstand such load.

A projection section 16 (only one visible in Fig. 1) of the first clamping plate 5 is folded around the second clamping plate 6 and thereby connecting them. A similar projection section is arranged at the other side (only partly visible in Fig. 1).

Naturally, screws or similar could be used to hold the clamping plates together if an even stronger tension is necessary, this would, however, add an extra element to the device.

Folding the projection sections 16 of the clamping plates 5, 6 around the other clamping plate respectively is a simple and cheap way of integrating the sleeve member 12 with the two clamping plates 5, 6.

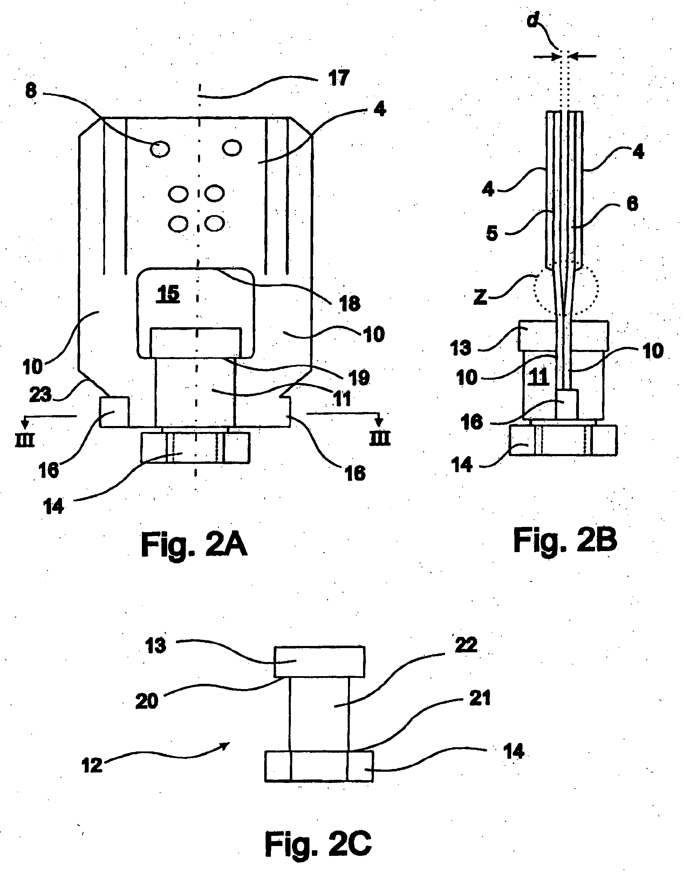

Fig. 2A and 2B show the tension device 1 seen from the front and from the side. The apertures 8 in which the fastening means is positioned in Fig. 1 are seen e.g. spaced 20 mm apart. A distance of 20 mm enables the clamping plates 5, 6 to receive a strap 2 also having its apertures spaced 20 mm apart.

The clamping plates 5, 6 are arranged having the first clamping end part 4 in a plane parallel to a longitudinal axis 17 of the tension device. This longitudinal axis is coaxial with the tension force when the tension device 1 is in its installed position. The second end parts 10 of the clamping plates 5, 6 are arranged in a second plane parallel to the longitudinal axis 17 but dislocated from the first plane. As seen best in fig. 2B this dislocation of first end part 4 and the second end part 10 forms each clamping plate 5, 6 as a very stretched "Z" (the dislocation is indicated in Fig. 2B by a dotted circle Z). In this way a distance *d* of e.g. essentially 2 mm is achieved between the first end parts 4 of the clamping plates 5, 6.

It is seen that the opening 15 leaves space for a threaded rod 3 (not shown) or similar means to be drawn through the sleeve member 12 into this space. Hereby, it is possible to draw the rod 3 and the strap 2 towards each other, not only the length of the sleeve member 12 but in addition to this length the distance from the first end 13 of the sleeve member to the second end part edge 18 of the opening 15.

Shown best in Fig. 2C, the sleeve member 12 is seen having a first inner surface 20 on the end collar 13 that in its installed position bears on the tubular bearing member 11. The second end collar 14 has a second inner surface 21 that prevents the sleeve member from sliding out of the tubular bearing member 11. Furthermore, the swivel surface 22 of the sleeve member 12 is seen. In this embodiment, the sleeve member 12 is provided with an internal thread (not shown) e.g. adapted to receive a 10 mm or 12 mm threaded rod, bolt or similar.

The inner surface 20 of the first end collar 13 of the sleeve member 12 bears against the rim 19 of the tubular bearing member 11.

The tubular bearing member 11 is an elongated tube with a wall thickness essentially the same as the thickness of the clamping plates 5, 6. This creates a strong moment of inertia in the direction of the longitudinal axis 17. In order to maintain the tubular shape of the bearing 11 during tension the clamping plates 5, 6 are held together by folding the projection sections 16 around the other clamping plate 5 or 6 respectively. The projection sections 16 are projecting from the outer edge 23 of the second end 10 of the clamping plates 5, 6. This position of the projection sections 16 ensures that the clamping plates 5, 6 are locked together at the point of which they are most likely to separate when stressed.

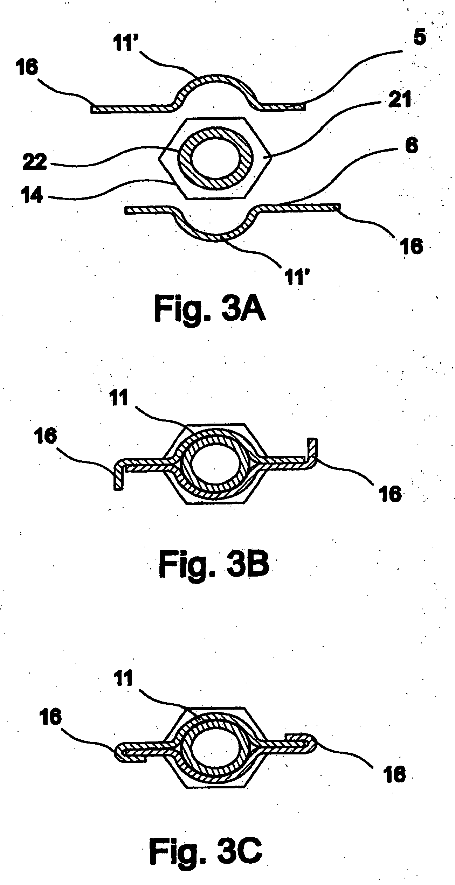

Fig. 3A - 3C show the process of folding the projection sections 16 around the other clamping plate 5, 6. By combining the two clamping plates 5, 6 the tubular bearing 11 is formed due to the fact that each clamping plate 5, 6 is providing one half 11' of the final tubular bearing 11. It is seen that the process of combining the two clamping plates 5, 6 is a simple and easy process that could be carried out both manually as well as automatically. In an automated manufacturing process this could e.g. be by having a robot picking up the clamping plates 5, 6 and placing the sleeve member 12 between them before folding the projection sections 16 around the other clamping plate respectively. The swivel surface 22 of the sleeve member 12 is enclosed by the two halves 11' of the clamping plates 5, 6 thus forming the final tubular bearing member 11.

## Claims

1. A tension device (1) for receiving and tensioning connecting means e.g. a strap (2) and a threaded rod (3) between at least two construction elements wherein the tension device (1) comprises:
- two connected clamping plates (5, 6), each clamping plate (5, 6) having a first end part (4) and a second end part (10), said first end part (4) of the clamping plates (5, 6) having a number of apertures (8) adapted to receive fastening means (7), the apertures (8) of the two clamping plates (5, 6) being respectively in alignment of each other, and the clamping plates (5, 6) defining a longitudinal axis (17) in the direction of the tension,
- said second end part (10) of each of the clamping plates (5, 6) being provided with an opening (15), the openings (15) of the clamping plates (5, 6) being in alignment of each other, the opening (15) of each clamping plate defining a bridge section between the opening and the end of the clamping plate (5, 6) opposite the first end part (4),
- a sleeve member (12) having a first end collar (13) and a second end collar (14) and an intermediate swivel surface (22) delimited by the collars (13, 14),
and
- the bridge sections of the two clamping plates (5,6) jointly form a tubular bearing member (11) substantially coaxial with the said longitudinal axis (17),said tubular bearing member (11) enclosing the sleeve member (12) between the collars (13, 14).

2. A tension device (1) according to claim 1, **characterised in that** each clamping plate (5, 6) is provided with at least one projection section (16) with a first end attached to the clamping plates (5, 6) and a second free end, said projection section (16) being bend so that the first clamping plate (5) and the second clamping plate (6) are connected at least in a direction perpendicular to said longitudinal axis (17).

3. A tension device (1) according to claim 1 or claim 2, **characterised in that** the projection section (16) is projecting from the edge of the clamping plates (5, 6) at the second end (10) of the clamping plates (5, 6).

4. A tension device (1) according to any one of claims 1, 2 or 3, **characterised in that** the length of the projection section (16) from its first end to its free second end is at least twice as long as the thickness of the clamping plates (5, 6).

5. A tension device (1) according to any one of claims 1 to 4, **characterised in that** the first end part (4) of each clamping plate (5, 6) is arranged in a first plane essentially parallel to the longitudinal axis (17) and the second end part (10) of each clamping plate (5, 6) is arranged in a second plane essentially parallel to the longitudinal axis (17), the second end part (10) of the two clamping plates (5, 6) abutting each other.

6. A tension device (1) according to any one of claims 1 to 5, **characterised in that** the clamping plates (5, 6) are essentially identical.

7. A tension device (1) according to any one of claims 1 to 6, **characterised in that** the sleeve member (12) is provided with an internal thread.

8. A tension device (1) according to any one of claims 1 to 7, **characterised in that** the distance (*d*) between the first end part (4) of the clamping plates (5, 6) is 1 - 3 mm, preferably 1,25 - 2,75 mm, most preferred 1,5 - 2,5 mm.

9. A tension device (1) according to any one of claims 1 to 8, **characterised in that** at least a number of the apertures (8) are arranged with a distance of essentially 20 mm on a line perpendicular to the direction of the tension.

10. A method of producing a tension device (1) according to any one of claims 1 to 9, **characterised in that** the method comprises the steps of:
- providing raw material e.g. in form of coils,
- punching apertures (8) arranged at the first end part (4) of the clamping plates (5, 6),
- punching an opening (15),
- forming at least one projection section (16) on at least one edge (23) of the second end part (10) of each clamping plate (5, 6),
- forming each clamping plate in a stretched Z-form by forming the clamping plates (5, 6) in such way as to have the first end part (4) in a first plane parallel to the longitudinal axis (17) of the clamping plates (5, 6) and the second end part (10) in a second plane parallel to the longitudinal axis (17) of the clamping plate (5, 6), said two planes being essentially parallel,
- forming a semi-circular bearing surface (11') in the bridge section of the second end part (10) of each clamping plate (5, 6),
- placing the sleeve member (12) in the semi-circular bearing surface (11') of one of the clamping plates (5, 6),
- rotating the other clamping plate (5, 6) in such way that the first end part (4) of the clamping plates (5, 6) are opposing each other and the projection sections (16) extending from the edges (23) are respectively on each side of the sleeve member (12),
- placing the second clamping plate (6) in such way that it covers the first clamping plate (5) by abutting the second end parts (10) of the clamping plates (5, 6), thereby forming an essentially tubular bearing member (11) of the cooperating second end parts (10) of the clamping plates (5, 6),
- folding the projection sections (16) of the clamping plates (5, 6) essentially 180° around a part of the other clamping plate (5, 6), whereby the two clamping plates (5, 6) and the sleeve member (12) are locked together.

## Patentansprüche

1. Spannvorrichtung (1) zum Aufnehmen und Spannen von Verbindungsmitteln beispielsweise eines Bandes (2) und einer Gewindestange (3) zwischen mindestens zwei Konstruktionselementen, wobei die Spannvorrichtung (1) umfasst:
- zwei verbundene Klemmplatten (5, 6), wobei jede Klemmplatte (5, 6) einen ersten Endbereich (4) und einen zweiten Endbereich (10) aufweist, wobei der erste Endbereich (4) der Klemmplatten (5, 6) eine Anzahl von Ausnehmungen (8) aufweist ausgelegt zum Aufnehmen von Befestigungsmitteln (7), wobei die Ausnehmungen (8) der zwei Klemmplatten (5, 6) respektive aufeinander ausgerichtet sind und wobei die Klemmplatten (5, 6) eine longitudinale Achse (17) in der Richtung der Spannung definieren,
- der zweite Endbereich (10) von jeder der Klemmplatten (5, 6) ist mit einer Öffnung (15) versehen, wobei die Öffnungen (15) der Klemmplatten (5, 6) aufeinander ausgerichtet sind, wobei die Öffnungen (15) von jeder Klemmplatte einen Brückenbereich zwischen der Öffnung und dem Ende der Klemmplatte (5, 6) gegenüber dem ersten Endbereich (4) definieren,
- ein Manschettenelement (12) aufweisend einen ersten Endbund (13) und einen zweiten Endbund (14) und eine dazwischen liegende Schwenkfläche (22) begrenzt durch die Bunde (13, 14), und
- die Brückenbereiche der zwei Klemmplatten (5, 6) bilden gemeinsam ein rohrartiges Lagerelement (11) im Wesentlichen koaxial mit der longitudinalen Achse (17), wobei das rohrartige Lagerelement (11) das Manschettenelement (12) zwischen den Bunden (13, 14) umschließt.

2. Spannvorrichtung (1) nach Anspruch 1, **dadurch gekennzeichnet, dass** jede Klemmplatte (5, 6) mit mindestens einem Vorsprungsbereich (16) versehen ist mit einem ersten Ende angebracht an den Klemmplatten (5, 6) und einem zweiten freien Ende, wobei der Vorsprungsbereich (16) so gebogen ist, dass die erste Klemmplatte (5) und die zweite Klemmplatte (6) mindestens in einer Richtung rechtwinklig zu der longitudinalen Achse (17) verbunden sind.

3. Spannvorrichtung (1) nach Anspruch 1 oder Anspruch 2, **dadurch gekennzeichnet, dass** der Vorsprungsbereich (16) von dem Rand der Klemmplatten (5, 6) an dem zweiten Ende (10) der Klemmplatten (5, 6) vorspringt.

4. Spannvorrichtung (1) nach Anspruch 1, 2 oder 3, **dadurch gekennzeichnet, dass** die Länge des Vorsprungsbereich (16) von seinem erstem Ende zu seinem freien Ende mindestens zweimal so lang wie die Dicke der Klemmplatten (5, 6) ist.

5. Spannvorrichtung (1) nach irgendeinem der Ansprüche 1 bis 4, **dadurch gekennzeichnet, dass** der erste Endbereich (4) von jeder Klemmplatte (5, 6) angeordnet ist in einer ersten Ebene im Wesentlichen parallel zu der longitudinale Achse (17) und der zweite Endbereich (10) von jeder Klemmplatte (5, 6) angeordnet ist in einer zweiten Ebene im Wesentlichen parallel zu der longitudinalen Achse (17), wobei die zweiten Endbereiche (10) der zwei Klemmplatten (5, 6) gegenseitig aneinander anliegen.

6. Spannvorrichtung (1) nach irgendeinem der Ansprüche 1 bis 5, **dadurch gekennzeichnet, dass** die Klemmplatten (5, 6) im Wesentlichen identisch sind.

7. Spannvorrichtung (1) nach irgendeinem der Ansprüche 1 bis 6, **dadurch gekennzeichnet, dass** das Manschettenelement (12) mit einem internen Gewinde versehen ist.

8. Spannvorrichtung (1) nach irgendeinem der Ansprüche 1 bis 7, **dadurch gekennzeichnet, dass** die Distanz (D) zwischen dem ersten Endbereich (4) der Klemmplatten (5, 6) 1 - 3 mm ist, bevorzugt 1,25 - 2,75 mm, am meisten bevorzugt 1,5 - 2,5 mm.

9. Spannvorrichtung (1) nach irgendeinem der Ansprüche 1 bis 8, **dadurch gekennzeichnet, dass** mindestens eine Anzahl der Ausnehmungen (8) angeordnet sind mit einer Distanz von im Wesentlichen 20 mm auf einer Linie rechtwinklig zu der Richtung der Spannung.

10. Verfahren zum Herstellen einer Spannvorrichtung (1) nach irgend einem der Ansprüche 1 bis 9, **dadurch gekennzeichnet, dass** das Verfahren die Schritte umfasst:
- Bereitstellen von Rohmaterial, beispielsweise in Form von Wicklungen,
- Stanzen von Ausnehmungen (8) angeordnet an dem ersten Endbereich (4) der Klemmplatten (5, 6),
- Stanzen einer Öffnung (15),
- Ausbilden von mindestens einem Vorsprungsbereich (16) an mindestens einem Rand (23) des zweiten Endbereichs (10) von jeder Klemmplatte (5, 6),
- Ausbilden von jeder Klemmplatte in einer gestreckten Z-Form mittels Ausbilden der Klemmplatten (5, 6) in solcher Weise, um den ersten Endbereich (4) in einer ersten Ebene parallel zu der longitudinalen Achse (17) der Klemmplatten (5, 6) zu haben und den zweiten Endbereich (10) in einer zweiten Ebene parallel zu der longitudinalen Achse (17) der Klemmplatten (5, 6) zu haben, wobei die zwei Ebenen im Wesentlichen parallel sind,
- Ausbilden einer halbkreisförmigen Lagerfläche (11') in dem Brückenbereich des zweiten Endbereichs (10) von jeder Klemmplatte (5, 6),
- Platzieren des Manschettenelements (12) in der halbkreisförmigen Lagerfläche (11') von einer der Klemmplatten (5, 6),
- Drehen der anderen Klemmplatte (5, 6) in der Weise, dass die ersten Endbereiche (4) der Klemmplatten (5, 6) gegenüberliegend zueinander sind und die sich von den Rändern (23) erstreckenden Vorsprungsbereiche (16) respektive an jeder Seite des Manschettenelements (12) sind,
- Platzieren der zweiten Klemmplatte (6) in der Weise, dass sie die erste Klemmplatte (5) abdeckt mittels Anliegen der zweiten Endbereiche (10) der Klemmplatten (5, 6), wodurch ein im Wesentlichen röhrenförmiges Lagerelement (11) aus den kooperierenden zweiten Endbereiche (10) der Klemmplatten (5, 6) ausgebildet ist,
- Falten der Vorsprungsbereiche (16) der Klemmplatten (5, 6) im Wesentlichen 180° um einen Bereich der anderen Klemmplatte (5, 6) herum, wodurch die zwei Klemmplatten (5, 6) und das Manschettenelement (12) miteinander verriegelt werden.

## Revendications

1. Dispositif de tension (1) pour recevoir et tendre des moyens de liaison par exemple une sangle (2) et une tige filetée (3) entre au moins deux éléments de construction, où le dispositif de tension (1) comprend :
- deux plaques de serrage (5, 6) reliées, chaque plaque de serrage (5, 6) ayant une première partie d'extrémité (4) et une deuxième partie d'extrémité (10), ladite première partie d'extrémité (4) des plaques de serrage (5, 6) ayant un nombre d'ouvertures (8) adaptées pour recevoir un moyen de fixation (7), les ouvertures (8) des deux plaques de serrage (5, 6) étant respectivement alignées entre elles, et les plaques de serrage (5, 6) définissant un axe longitudinal (17) dans la direction de la tension,
- ladite deuxième partie d'extrémité (10) de chacune des plaques de serrage (5, 6) étant munie d'une ouverture (15), les ouvertures (15) des plaques de serrage (5, 6) étant alignées entre elles, l'ouverture (15) de chaque plaque de serrage définissant une section de pont entre l'ouverture et l'extrémité de la plaque de serrage (5, 6) opposée à la première partie d'extrémité (4),
- un organe de manchon (12) ayant un premier collier d'extrémité (13) et un deuxième collier d'extrémité (14) et une surface de pivotement intermédiaire (22) délimitée par les colliers (13, 14), et
- les sections de pont des deux plaques de serrage (5, 6) forment conjointement un organe de support tubulaire (11) substantiellement coaxial audit axe longitudinal (17), ledit organe de support tubulaire (11) entourant l'organe de manchon (12) entre les colliers (13, 14).

2. Dispositif de tension (1) selon la revendication 1, **caractérisé en ce que** chaque plaque de serrage (5, 6) est munie d'au moins une section formant saillie (16) avec une première extrémité attachée aux plaques de serrage (5, 6) et une deuxième extrémité libre, ladite section formant saillie (16) étant courbée de sorte que la première plaque de serrage (5) et la deuxième plaque de serrage (6) soient reliées au moins dans une direction perpendiculaire audit axe longitudinal (17).

3. Dispositif de tension (1) selon la revendication 1 ou 2, **caractérisé en ce que** la section formant saillie (16) fait saillie à partir du bord des plaques de serrage (5, 6) au niveau de la deuxième extrémité (10) des plaques de serrage (5, 6).

4. Dispositif de tension (1) selon l'une quelconque des revendications 1, 2 ou 3, **caractérisé en ce que** la longueur de la section formant saillie (16) de sa première extrémité à sa deuxième extrémité libre est au moins deux fois plus grande que l'épaisseur des plaques de serrage (5, 6).

5. Dispositif de tension (1) selon l'une quelconque des revendications 1 à 4, **caractérisé en ce que** la première partie d'extrémité (4) de chaque plaque de serrage (5, 6) est agencée dans un premier plan essentiellement parallèle à l'axe longitudinal (17) et la deuxième partie d'extrémité (10) de chaque plaque de serrage (5, 6) est agencée dans un deuxième plan essentiellement parallèle à l'axe longitudinal (17), les deuxièmes parties d'extrémité (10) des deux plaques de serrage (5, 6) venant en butée l'une contre l'autre.

6. Dispositif de tension (1) selon l'une quelconque des revendications 1 à 5, **caractérisé en ce que** les plaques de serrage (5, 6) sont essentiellement identiques.

7. Dispositif de tension (1) selon l'une quelconque des revendications 1 à 6, **caractérisé en ce que** l'organe de manchon (12) est muni d'un filetage interne.

8. Dispositif de tension (1) selon l'une quelconque des revendications 1 à 7, **caractérisé en ce que** la distance (d) entre les premières parties d'extrémité (4) des plaques de serrage (5, 6) se trouve dans une plage allant de 1 à 3 mm, de préférence allant de 1,25 à 2,75 mm, plus préférablement allant de 1,5 à 2,5 mm.

9. Dispositif de tension (1) selon l'une quelconque des revendications 1 à 8, **caractérisé en ce qu'**au moins un nombre des ouvertures (8) sont agencées avec une distance de 20 mm essentiellement sur une ligne perpendiculaire à la direction de la tension.

10. Procédé de production d'un dispositif de tension (1) selon l'une quelconque des revendications 1 à 9, **caractérisé en ce que** le procédé comprend les étapes qui consistent :
- à fournir une matière première par exemple sous forme de bobines,
- à perforer des ouvertures (8) agencées au niveau de la première partie d'extrémité (4) des plaques de serrage (5, 6),
- à perforer une ouverture (15),
- à former au moins une section formant saillie (16) sur au moins un bord (23) de la deuxième partie d'extrémité (10) de chaque plaque de serrage (5, 6),
- à façonner chaque plaque de serrage sous forme de Z étirée en formant les plaques de serrage (5, 6) de manière à avoir la première partie d'extrémité (4) dans un premier plan parallèle à l'axe longitudinal (17) des plaques de serrage (5, 6) et la deuxième partie d'extrémité (10) dans un deuxième plan parallèle à l'axe longitudinal (17) de la plaque de serrage (5, 6), lesdits deux plans étant essentiellement parallèles,
- à former une surface de support semi-circulaire (11') dans la section de pont de la deuxième partie d'extrémité (10) de chaque plaque de serrage (5, 6),
- à placer l'organe de manchon (12) dans la surface de support semi-circulaire (11') de l'une des plaques de serrage (5, 6),
- à faire tourner l'autre plaque de serrage (5, 6) de sorte que les premières parties d'extrémité (4) des plaques de serrage (5, 6) soient opposées l'une à l'autre et les sections formant saillies (16) s'étendant à partir des bords (23) soient respectivement de chaque côté de l'organe de manchon (12),
- à placer la deuxième plaque de serrage (6) de sorte qu'elle couvre la première plaque de serrage (5) par la mise en butée des deuxièmes parties d'extrémité (10) des plaques de serrage (5, 6), formant ainsi un organe de support essentiellement tubulaire (11) des deuxièmes parties d'extrémité (10) coopérantes des plaques de serrage (5, 6),
- à plier les sections formant saillies (16) des plaques de serrage (5, 6) essentiellement à 180° autour d'une partie de l'autre plaque de serrage (5, 6), grâce à quoi les deux plaques de serrage (5, 6) et l'organe de manchon (12) sont verrouillés ensemble.
